# EUROPEAN PATENT SPECIFICATION

(11) **EP 3 402 652 B1**
(45) Date of publication and mention of the grant of the patent: **26.02.2020**
(21) Application number: 17709788.8
(22) Date of filing: 13.01.2017
(51) Int. Cl.: B29C 64/124, B29C 64/20, B33Y 30/00

(54) **IMPROVED STEREOLITHOGRAPHY MACHINE WITH FACILITATED INITIALIZATION.**
VERBESSERTE STEREOLITHOGRAPHIEMASCHINE MIT ERLEICHTERTER INITIALISIERUNG
MACHINE DE STÉRÉOLITHOGRAPHIE AMÉLIORÉE À INITIALISATION FACILITÉE

(30) Priority: 15.01.2016 IT UB20160242
(43) Date of publication of application: 21.11.2018
(73) Proprietor: DWS S.R.L., 36016 Thiene (VI) (IT)
(72) Inventor: MOSCHELLA, Carlo, Antonio, 36016 Thiene (vi) (IT)
(74) Representative: Marchioro, Paolo
(86) International application number: PCT/IB2017/050186
(87) International publication number: WO 2017/122167

(56) References cited:
- WO-A1-2013/177620
- US-A1- 2015 328 841

## Description

The present invention concerns a stereolithography machine whose initialization is particularly simple and which, therefore, is suited to be used also by inexpert operators.

As is known, a stereolithography machine is used for the production of complex three-dimensional objects, starting from a light-sensitive resin which is polymerized in layers by means of a light beam.

A stereolithography machine comprises a tank containing the above mentioned resin and a modelling plate which faces the bottom of the tank and supports the three-dimensional object being formed.

The modelling plate is associated with a supporting unit so that it can be moved according to a direction of movement that is orthogonal to the bottom of the tank.

In order to make each layer of the object, the surface of the preceding layer or, in the case of the first layer, the surface of the modelling plate are immersed in the resin until they are arranged at a distance from the bottom of the tank which is equal to the thickness of the layer to be obtained, in such a way as to define a corresponding layer of resin.

Successively, said resin layer is polymerized through irradiation with a light beam coming from under the tank, which for this purpose has a transparent bottom.

Before the processing cycle can be started, the machine needs to be initialized with a procedure during which the modelling plate is regulated with respect to the supporting unit so that its surface is as parallel to the bottom of the tank as possible.

Said initialization procedure, furthermore, allows the machine to store the actual position of the bottom of the tank, so that said surface can be placed automatically and precisely at any prefixed distance from the bottom itself.

Said initialization procedure is necessary because the dimensions of the tank, which is usually made of a plastic material, are not known in advance and show tolerances in terms of both size and shape.

In fact, the incorrect positioning of the modelling plate with respect to the bottom of the tank can damage the tank itself, in addition to causing the faulty solidification of the first layers of the object, which in turn may lead to the production of processing rejects.

Therefore, the initialization procedure must be carried out when the machine is used for the first time and after each replacement of the tank.

Since the thickness of each layer of the object is generally of the order of tenths of millimetres, very high precision is required when positioning the plate with respect to the bottom of the tank.

According to the initialization procedure known in the art, the modelling plate is brought into contact with the bottom of the tank while at the same time keeping it released from the supporting unit, in such a way as to allow it to be positioned in close contact with the bottom of the tank.

For this purpose, the modelling plate is associated with the supporting unit through movable means that allow both its relative movement with respect to the supporting unit according to the direction of movement and its limited rotation according to axes that are orthogonal to the direction of movement.

After placing the modelling plate in contact with the bottom of the tank, the operator acts on special adjustable spacers that project from the supporting unit towards the modelling plate, extending them until they come into contact with the modelling plate itself.

Finally, the operator acts on a screw which, exerting a traction force on the modelling plate, locks it against said spacers.

The position obtained in this manner is stored by the control system of the supporting unit.

The initialization procedure just described above poses the drawback that it is rather complex and, therefore, not suited to be carried out by an inexpert operator.

Said procedure poses the further drawback that, if the forces applied to the different spacers are excessive or different from one another, they generate non-negligible and/or non-homogeneous deformations on the bottom of the tank, which lead to considerable imprecision in the positioning of the modelling plate itself.

According to the known art, in order to avoid the drawback described above a paper sheet is interposed between the modelling plate and the bottom of the tank. After placing the modelling plate in contact with the bottom of the tank and tightening the spacers, the operator makes sure that the paper sheet can still be removed from under the modelling plate, which ensures the absence of excessive localized pressures.

It can be understood that said operation makes the initialization procedure even more complex and furthermore is characterized by scarce repeatability, thus introducing possible errors.

As a further drawback, the interposition of the paper sheet prevents the modelling plate from resting perfectly on the bottom of the tank, due to the thickness of the paper sheet itself.

Since generally said thickness is not known with sufficient precision, there is the further drawback that a certain degree of approximation is introduced in the initialization procedure, further limiting the precision obtained.

In addition to the above, the interposition of said sheet poses the drawback that the initialization procedure cannot be carried out with the tank filled with resin.

According to a known embodiment of a stereolithography machine, in the attempt to at least partially overcome the drawbacks described above, the tank is supported by elastic elements that allow a certain excursion of the same in the direction of movement of the modelling plate.

Said excursion eliminates the need for the initialization procedure, since the yielding of the elastic elements makes it possible to compensate for the imprecise dimensions of the tank.

However, since said dimensional imprecision is not known in advance, during the production of the first layers of the three- dimensional object the modelling plate will come to be arranged in an incorrect position with respect to the bottom of the tank, thus leading to a faulty configuration of the layers themselves.

Consequently, in the embodiment described above, it is necessary to provide for some "disposable" initial layers, which will be successively eliminated at the end of the processing cycle.

In order to correctly eliminate said initial layers it will be necessary to interpose some easily separable elements, which will occupy further layers, between the layers themselves and the object.

Obviously, the creation of said disposable layers and of the further layers increases the overall processing time and the quantity of resin necessary for the construction of the object.

Further embodiments of stereolithography machines that allow the position of the modelling plate to be regulated with respect to the supporting unit are described in documents WO 2013/177620 and US 2015/0328841.

The present invention intends to overcome all of the above mentioned drawbacks which are typical of the stereolithography machines of the known types described above.

In particular, it is an object of the present invention to provide a stereolithography machine that can be initialized by means of a simpler procedure compared to that described above.

It is another object of the present invention to provide a machine that allows a more precise initialization procedure to be carried out, without making the same procedure more complicated.

The objects described above are achieved by a stereolithography machine made according to the main claim. Further characteristics and details are specified in the corresponding dependent claims.

Advantageously, the easier initialization of the machine that is the subject of the invention makes the latter suited to be used also by inexpert operators.

Still advantageously, the easier initialization of the machine that is the subject of the invention makes it possible to carry out the initialization procedure more rapidly compared to the machines of the known type, thus reducing machine downtimes.

Still advantageously, the higher initialization precision which can be achieved with the machine that is the subject of the invention avoids the need to provide additional initial layers for the three-dimensional object, thus reducing the time necessary to make the object itself and the quantity of resin required.

Said objects and advantages, together with others that will be mentioned later on, are illustrated in the description of a preferred embodiment of the invention which is provided by way of non-limiting example with reference to the attached drawings, wherein:
- Figure 1 shows an axonometric view of the stereolithography machine of the invention;
- Figures 2 and 3 show side sectional views of the stereolithography machine of Figure 1 in corresponding different operating configurations;
- Figures 2a and 3a show respective enlarged details of Figures 2 and 3;
- Figure 4 shows a front sectional view of the stereolithography machine of Figure 1;
- Figures 5 and 6 show side sectional views of a detail of the stereolithography machine of Figure 1, respectively in the operating configurations illustrated in Figures 2 and 3.

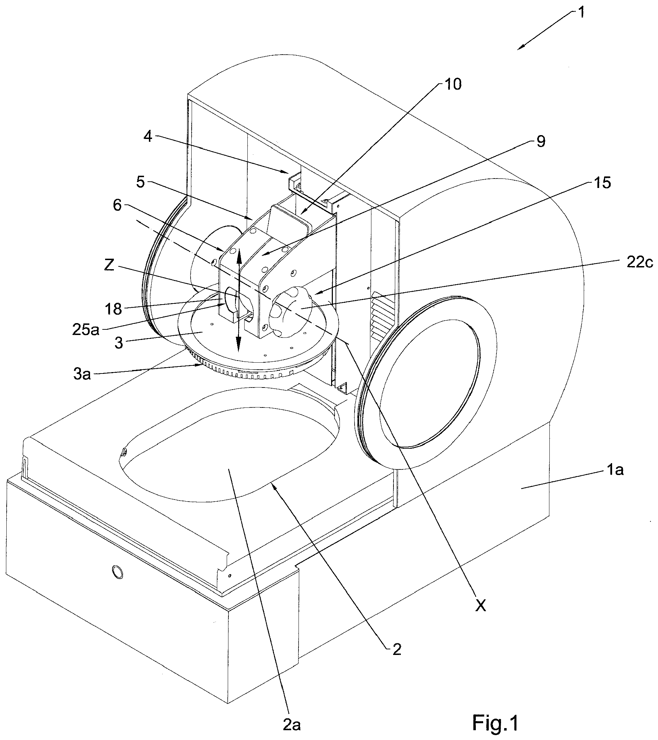

The stereolithography machine of the invention, indicated as a whole by **1** in Figure 1, comprises a frame **1a** which supports a tank **2** containing a light sensitive resin and provided with a bottom **2a.**

The bottom **2a** is transparent, in such a way as to allow the passage of a light beam originating from a source not illustrated in the drawings but known per se, arranged under the tank **2** and suited to selectively solidify a layer of resin arranged so that it is adjacent to the bottom **2a** itself.

Furthermore, a modelling plate **3** is provided, which has a modelling surface **3a** facing towards the bottom **2a.**

The modelling surface **3a** is used to support the first layer of the three-dimensional object that is solidified, which in turn serves as a support for a second layer, and so on for the successive layers.

The modelling plate **3** is supported by a supporting unit **5**, in turn associated with the frame **1a** through guide means and through moving means **4** suited to move the supporting unit **5** and, consequently, the plate **3**, according to a direction of movement **Z** orthogonal to the bottom **2a.**

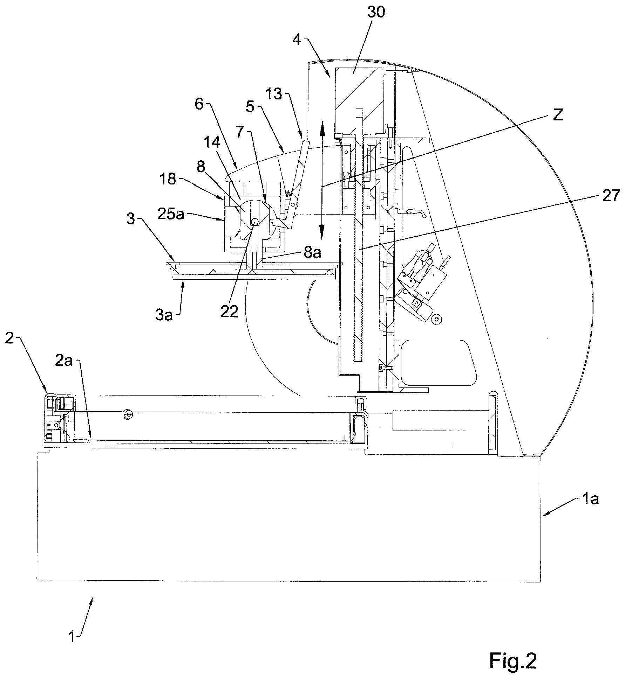

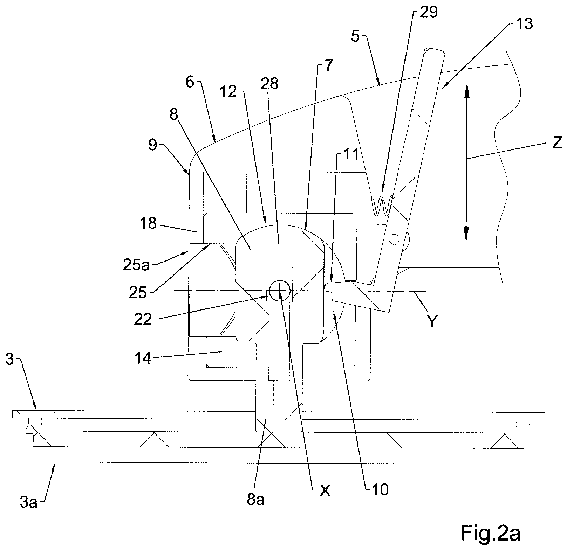

Preferably but not necessarily, the moving means **4** comprise a servo motor **30**, for example a stepping motor, visible in Figure 2.

Preferably, said servo motor **30** operates a worm screw **27**, also visible in Figure 2, which in turn is operatively associated with the supporting unit **5.**

The moving means **4** allow the modelling plate **3** to be moved according to the direction of movement **Z**, in such a way as to arrange the modelling surface **3a**, or the surface of the last solidified layer of the object, so that it is immersed in the resin at a distance from the bottom **2a** corresponding to the thickness of the successive layer to be obtained.

In order to allow the initialization procedure described above to be carried out, the modelling plate **3** is connected to the supporting unit **5** by means of a coupling unit **6** which makes it possible to modify the position of the modelling plate **3** with respect to the supporting unit **5** and which can be locked in order to make the plate **3** integral with the supporting unit **5.**

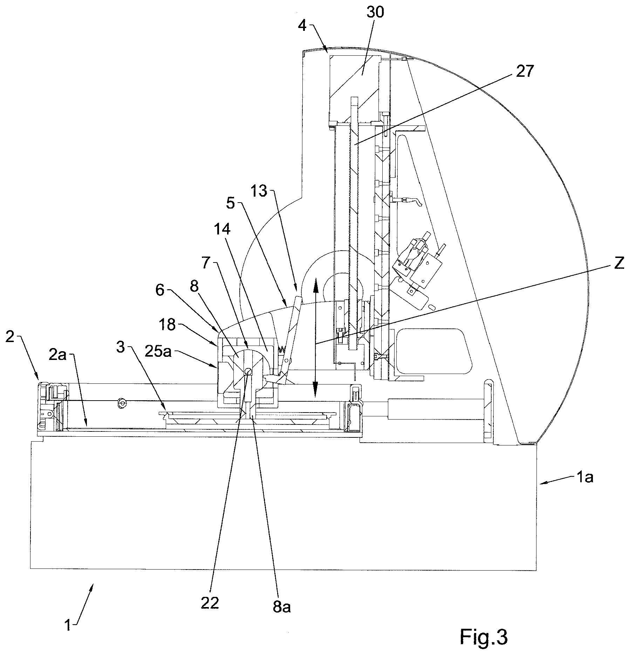

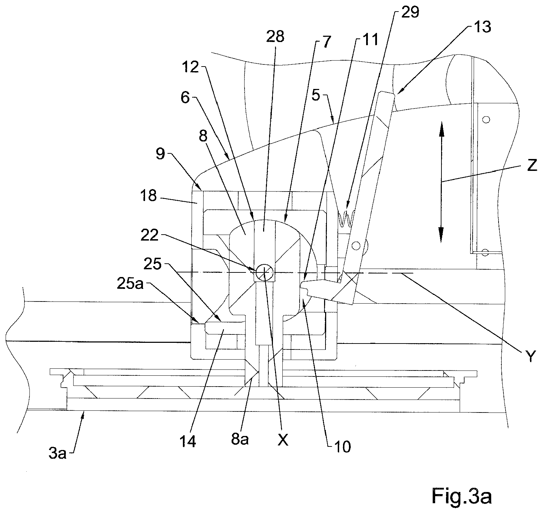

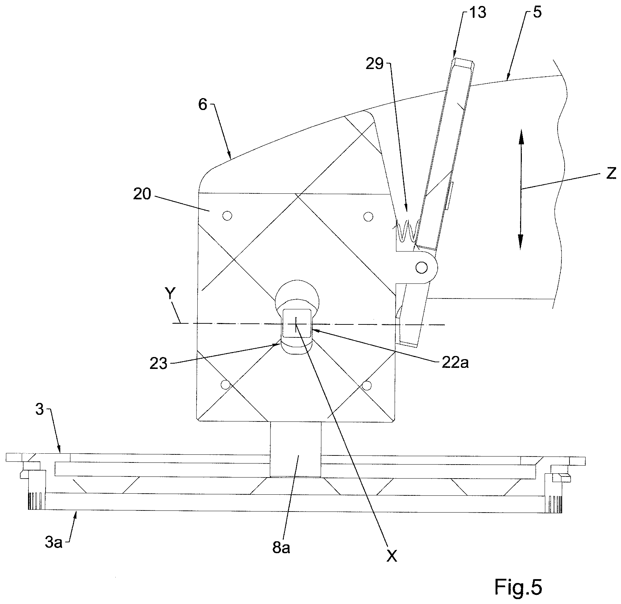

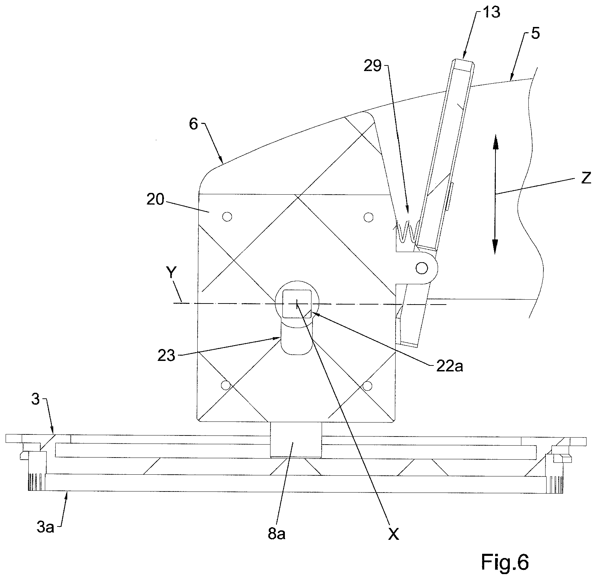

In particular, the coupling unit **6** is configured in such a way as to allow the translation of the modelling plate **3** with respect to the supporting unit **5**, according to the direction of movement **Z**, between a first linear position, represented in Figures 2a and 5, in which the plate **3** is positioned further away from the supporting unit **5**, and a second linear position, represented in Figures 3a and 6, in which it is positioned nearer to the supporting unit **5.**

Preferably, the coupling unit **6** is configured so as to force the modelling plate **3** in the first linear position, for example through the presence of elastic means not illustrated in the drawings but known per se.

Advantageously, said elastic means ensure that when the supporting unit **5** is lowered, during the initialization procedure, the modelling plate **3** remains in contact with the bottom **2a** of the tank **2.**

In a variant embodiment of the invention, said elastic means are absent and the modelling plate **3** is forced in the first linear position by the own dead load of the plate 3 itself.

The supporting unit **5**, furthermore, is configured in such a way as to allow also the rotation of the modelling plate **3** with respect to the supporting unit **5**, according to a rotation axis **X** perpendicular to the direction of movement **Z**, between a first angular position, in which the modelling surface **3a** is orthogonal to the direction of movement **Z**, and a second angular position, in which the modelling surface **3a** is rotated with respect to the first angular position.

Advantageously, during the initialization procedure said rotation allows the modelling plate **3** to adapt also to possible deviations of the bottom **2a** of the tank **2** around said rotation axis **X** with respect to the plane that is orthogonal to the direction of movement **Z.**

Preferably, the supporting unit **5** is configured so as to allow also a rotation of the modelling plate **3** with respect to the supporting unit **5**, according to a further rotation axis **Y** perpendicular to the first rotation axis **X** and to the direction of movement **Z.**

Advantageously, said rotation, combined with the previous movements described above, allows the modelling plate **3** to assume a position in which it perfectly adheres to the bottom **2a** of the tank **2** during the initialization procedure.

The machine **1** furthermore comprises clamping means **9** suited to be operated in such a way as to make the modelling plate **3** and the supporting unit **5** integral with each other, so as to prevent the above mentioned translation and rotation movements, and suited to be released in such a way as to allow said movements.

According to the invention, and as can be seen in greater detail in Figures 2a and 3a, the coupling unit **6** comprises a housing **7** and a spherical body **8** revolvingly arranged in said housing **7** so that it can rotate around said rotation axes **X** and **Y.**

In particular, the shape of the housing **7** is such that it prevents the translation of the spherical body **8** in the three spatial directions at least when the modelling plate **3** occupies an angular position sufficiently near said first angular position, meaning when the modelling surface **3a** forms, with respect to the direction of movement **Z**, an angle that differs from a right angle by a value smaller than a predefined value.

Preferably but not necessarily, the housing **7** has a spherical shape with diameter equal to the diameter of the spherical body **8**, thus improving the stability of the coupling in any mutual angular position.

According to the invention, furthermore, the clamping means **9** are configured in such a way as to press the housing **7** and the spherical body **8** against each other, so that the consequent friction between the respective surfaces prevents any mutual movement between the two components, thus making them actually integral with each other independently of their mutual position.

It can be understood that the coupling unit **6** described above behaves as a spherical joint that allows the modelling plate **3** to rotate around the rotation axis **X** and, if envisaged, also around said further rotation axis **Y**, assuming any angular position around said axes within a predefined angular interval.

Therefore, the coupling unit **6** and the clamping means **9** allow the machine **1** to be initialized through a very simple procedure, thus achieving one of the objects of the invention.

In fact, when the clamping means **9** are in the released configuration, the spherical body **8** is free to rotate in the housing **7**, thus allowing the modelling plate **3** to assume different orientations.

Therefore, the initialization procedure described above can be carried out by releasing the clamping means **9** and lowering the supporting unit **5** until arranging the modelling plate **3** so that it rests on the bottom **2a** of the tank **2.** Successively, the clamping means **9** are operated in such a way as to lock any mutual movement between the spherical body **8** and the housing **7**, so as to fix the position of the modelling plate **3** with respect to the supporting unit **5.**

The spherical constraint of the spherical body **8** is such that the operation of the clamping means **9** does not cause any relative movement between the modelling plate **3** and the supporting unit **5.**

In fact, the action of the clamping means **9** is limited to the generation of sufficient friction between the housing **7** and the spherical body **8** to lock the modelling plate **3** in the position spontaneously assumed by the latter when it came into contact with the bottom **2a.**

Therefore, said clamping means **9** do not cause lack of homogeneity in the contact pressures between the modelling plate **3** and the bottom **2a** and, therefore, it is not necessary to complete the procedure by verifying the correct distribution of the contact pressures of the modelling plate **3.**

The invention thus achieves the object to facilitate the initialization procedure of the machine **1**, making the latter suited to be used even by inexpert operators.

In particular, it is not even necessary to interpose a paper sheet between the modelling plate **3** and the bottom **2a**, as in the known art, and therefore any positioning error due to the uncertainty regarding the thickness of the paper sheet is avoided, thus achieving the further object to obtain an extremely precise initialization procedure.

Consequently, the processing of the three-dimensional object can be performed with no need to create "disposable" additional layers.

Therefore, it is advantageously possible to reduce the time required to process the object and the consumption of resin.

Still advantageously, the absence of additional layers eliminates the need to remove them through a successive finishing operation, thus further increasing the ease of use of the machine **1.**

The fact that it is not necessary to use a paper sheet to control the distribution of pressure implies the further advantage that the initialization procedure can be carried out even if there is resin in the tank **2**, with no need to empty it.

Furthermore, once the modelling plate **3** has been brought into contact with the bottom **2a** and has been fixed to the supporting unit **5**, the position obtained in this way can be directly used by the control system of the supporting unit **5** as a reference position for the processing cycle.

Therefore, it is possible to start the processing cycle with no need to carry out any further setting up operation on the machine, thus further increasing ease of use and reducing the processing time.

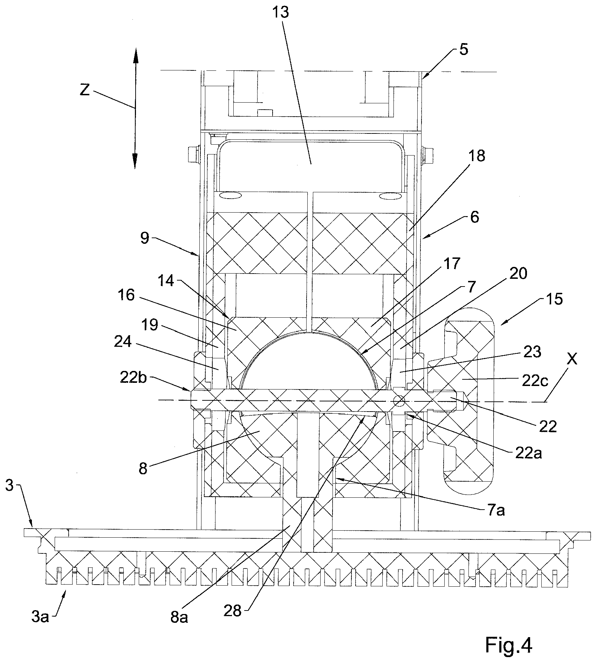

Preferably, and as shown in particular in Figure 4, the spherical body **8** is integral with the modelling plate **3**, to which it is connected through a connection body **8a**, while the housing **7** is connected to the supporting unit **5** and defines a slot **7a** which houses the connection body **8a** and allows it to move during the rotary movements of the spherical body **8** in the housing **7** according to the two rotation axes **X** and **Y.**

In particular, the slot **7a** extends around the rotation axis **X** over an angle equal to that which separates the first angular position from the second angular position.

Furthermore, the width of the slot **7a** in the direction perpendicular to said angular extension exceeds the width of the connection body **8a**, in such a way as to allow a certain rotation of the spherical body **8** according to the rotation axis **Y.**

It is evident that, in variant embodiments of the invention not illustrated in the drawings, the housing **7** can be connected to the modelling plate **3** and the spherical body **8** can be integral with the supporting unit **5**, without for this reason modifying the substance of the invention.

The solution described can be adapted, with the necessary and obvious modifications, also to the variant embodiments just mentioned above.

Preferably, and as shown in Figure 2a, the coupling unit **6** comprises also releasable stop means **10** suited to be operated to lock the modelling plate **3** in said second angular position.

In this way, at the end of the processing of the three-dimensional object, the modelling plate **3** can be locked in the second angular position with the modelling surface **3a** inclined, so that the excess liquid resin can easily drip into the underlying tank **2,** thus further increasing the ease of use of the machine.

Preferably, the second angular position is separated from the first angular position by approximately 90°, in such a way as to determine a vertical position of the modelling surface **3a**, thus ensuring better dripping of the excess resin.

Preferably, the stop means **10** comprise a stop body **11** which is maintained in contact with the spherical body **8** through the action of elastic means **29** visible in detail in Figure 2a.

Furthermore, the spherical body **8** is provided with a recess **12** suited to house the stop body **11** which snaps into it when the modelling plate **3** is arranged in the second angular position, release means **13** being provided, which can be operated by the user in order to release the stop body **11** from the recess **12.**

In this way, when the modelling plate **3** is rotated in the second angular position, the stop body **11** automatically snaps into the recess **12**, in such a way as to hold the spherical body **8** and, consequently, the modelling plate **3** in the second angular position.

Preferably, the release means **13** comprise a lever which can be accessed by the user and which, when shifted, causes the stop body **11** to be extracted from the recess **12** and, consequently, the modelling plate **3** to be released, thus allowing the latter to be rotated in an angular position different from the first angular position.

Said rotation of the modelling plate **3** can be performed manually or, more preferably, can take place spontaneously, which can be obtained, for example, by configuring the modelling plate **3** itself in such a way that its centre of gravity is shifted horizontally with respect to the rotation centre defined by the spherical body **8.**

This makes it possible to exploit the weight of the plate **3** in order to induce a torque which tends to rotate the plate **3** itself towards the first angular position. Still preferably, the coupling unit **6** includes friction means intended to brake the lowering movement of the modelling plate **3** towards the first angular position, which may include the presence of a slight interference between the spherical body **8** and its housing **7**, or between the connection body **8a** and the slot **7a.**

It is evident that, in variant embodiments of the invention, the stop means **10** can assume configurations different from the one described above.

For example, according to a possible variant embodiment of the stop means **10**, not illustrated in the drawings, the stop body **11** is provided with a recess and the spherical body **8** is provided with a corresponding projecting body suited to be fitted in said recess.

Preferably, the machine **1** is also equipped with a sensor, not illustrated in the figures but known per se, configured to detect the angular position of the modelling plate **3.**

The machine **1** is furthermore equipped with a system which prevents the start of the processing cycle if said sensor signals that the modelling plate **3** is in the second angular position.

As regards the clamping means **9**, these preferably comprise a hollow body **14** that defines the housing **7.**

The hollow body **14** can be deformed in such a way as to be pressed around the spherical body **8** and is associated with control means **15** suited to be operated to cause said deformation.

Preferably, the deformability of the hollow body **14** is obtained by making the latter so that it is constituted by two half-bodies **16**, **17** mutually facing each other and removably associated with each other, visible in detail in the sectional view of Figure 4, while the control means **15** can be operated in order to vary the mutual distance between the half-bodies **16**, **17.**

Preferably, the half-bodies **16**, **17** are mutually symmetrical and each one of them defines a corresponding cavity in a substantially hemispherical shape.

Still preferably, the half-bodies **16**, **17** are connected to the supporting unit **5** through elastic means that keep them in contact with the spherical body **8**, in such a way as to prevent the latter from translating with respect to the housing **7**, though allowing it to rotate.

Still preferably, the hollow body **14** is slidingly associated with the supporting unit **5** according to the direction of movement **Z** through a guide body **18** which, preferably, prevents the rotations of the hollow body **14** as well as its translations according to directions that are orthogonal to the direction of movement **Z.**

During the initialization procedure, said guide body **18** allows the modelling plate **3** to translate with respect to the supporting unit **5**, in such a way as to ensure that the modelling surface **3a** comes into contact with the bottom **2a** of the tank **2.**

In fact, said translation movement makes it possible to extend the lowering movement of the modelling plate **3** beyond the moment of the actual contact of the modelling surface **3a** with the bottom **2a**, giving the plate **3** time to correctly rest on the bottom **2a.**

For this purpose, forcing means are provided which force the modelling plate **3** towards the first linear position and which, advantageously, ensure perfect contact between the plate **3** and the bottom **2a** during said lowering movement.

Preferably, said forcing means comprise elastic means interposed between the hollow body **14** and the guide body **18**, not illustrated in the figures but known per se.

According to a variant embodiment, said forcing means comprise the dead load of the modelling plate **3**, which tends to push the latter downwards, overcoming any possible friction.

Preferably, the hollow body **14** is contained inside the guide body **18** mentioned above and the latter can be deformed in such a way as to press the hollow body **14** around the spherical body **8**, in such a way as to lock the modelling plate **3** as described above.

It can be understood that the configuration just described above allows, with a single deformation of the guide body **18**, to prevent both the translation of the hollow body **14** in the direction of movement **Z** and the rotation of the spherical body **8** in the housing **7**, thus facilitating the initialization of the machine.

The condition just described above is preferably obtained by equipping the guide body **18** with two jaws **19**, **20** which face the hollow body **14** on respective opposite sides.

The jaws **19**, **20** are removably associated with each other through the control means **15** mentioned above, which can be operated to adjust the mutual distance between the jaws themselves.

Preferably, said control means **15** comprise a screw **22**, preferably provided with an operating knob **22c.**

Said screw **22** connects the two jaws **19**, **20** with each other, in such a way that the rotation of the screw **22** in one direction causes the jaws **19**, **20** to move near each other and, therefore, the latter to be pressed around the hollow body **14**, and the rotation of the screw **22** in the opposite direction allows the two jaws **19**, **20** to be loosened and the hollow body **14** to be consequently released.

Preferably, the machine **1** is provided with a locking device suited to prevent the operation of the screw **22** when the modelling plate **3** is arranged in the first linear position.

Advantageously, said locking means prevent the modelling plate **3** from being locked on the supporting unit **5** when it is still lifted from the bottom **2a** of the tank **2** and, therefore, before the initialization procedure has been completed. In this way, it is possible to avoid damaging the bottom **2a** of the tank **2** during the lowering movement of the modelling plate **3.**

Preferably, the locking device comprises means suited to constrain the screw **22** to the spherical body **8** according to the direction of movement **Z** in such a way that, when the spherical body **8** moves with respect to the supporting unit **5** following the movement of the modelling plate **3** from the first linear position towards the second linear position, the screw **22** is moved accordingly.

The locking device furthermore comprises, in each one of the jaws **19**, **20**, a corresponding through slot **23**, **24** having an elongated shape that follows the direction of movement **Z**, which houses a corresponding end **22a, 22b** of the screw **22** and allows it to slide according to the direction of movement **Z.**

At least one first end **22a** of the screw **22** and the corresponding first through slot **23** in which said first end **22a** is inserted are configured so as to prevent the rotation of the screw **22** when the first end **22a** is arranged in a first position along the first through slot **23**, corresponding to the condition in which the modelling plate **3** is in its first linear position, illustrated in Figure 5.

At the same time, the first end **22a** and the first through slot **23** are configured so as to allow the rotation of the screw **22** when the first end **22a** is arranged in a second position along the first through slot **23**, corresponding to the condition in which the modelling plate **3** is in the second linear position, illustrated in Figure 6.

As long as the modelling plate **3** is lifted from the bottom **2a**, as shown in Figure 2, and is thus in the first position, the first end **22a** is locked in the first through slot **23**, as shown in Figure 2a, making it impossible to use the screw **22** to lock the modelling plate **3** to the supporting unit **5.**

Vice versa, when the modelling plate **3** is in contact with the bottom **2a**, in the second position shown in Figure 3, the screw **22** moves upwards along the slot **23** in such a way that its first end **22a** is free to rotate, as can be seen in Figure 3a, so as to allow the user to lock the modelling plate **3.**

As can be seen in Figures 5 and 6, the conditions described above are preferably obtained by providing the first end **22a** of the screw **22** with a square-shaped cross section, while the first through slot **23** is configured in such a way that it has two sections with different width.

More precisely, the lower end of the first through slot **23**, corresponding to the area occupied by the screw in said first position, is larger than the side of said square-shaped cross section and smaller than its diagonal, while the upper end is larger than said diagonal.

It is evident, on the other hand, that said conditions can be obtained by configuring the first end **22a** and the first through slot **23** in a different way than that just described above, provided that, according to a first direction, the cross section of the first end **22a** is narrower than its maximum width according to a direction incident on said first direction and that, furthermore, the width of the section of the first through slot **23** occupied by the screw **22** in said first position is included between said two widths and the width of the section of the first through slot **23** occupied by the screw **22** in said second position exceeds said maximum width.

In order to constrain the screw **22** to the spherical body **8** as described above, the latter is preferably provided with a through opening **28** which houses the screw **22.**

According to a variant embodiment of the invention, not illustrated in the drawings, the screw **22** is associated with the housing **7** in such a way as to obtain a constraint that is analogous to that described above.

Preferably, and as can be seen for example in Figure 2a, the cross section of the spherical body **8** according to a reference plane passing through the rotation axis **X** has a flattened shape.

At the same time, the hollow body **14** and the guide body **18** are provided with respective openings **25**, **25a** whose shape matches said flattened cross section of the spherical body **8.**

In particular, said openings **25** and **25a** are configured so as to make it impossible to extract the spherical body **8** from the hollow body **14** and from the guide body **18** when the modelling plate **3** is arranged in the first angular position and to allow it to be extracted when the modelling plate **3** is arranged in the second angular position, or in any case in a position different from the first angular position.

Said flattened cross section of the spherical body **8** and the presence of the openings **25** and **25a** make it possible to uncouple the spherical body **8** from the housing **7** in a simple and rapid manner when the modelling plate **3** is in the second angular position, for example in order to remove the object from the machine at the end of the processing cycle with no need to detach it from the modelling plate **3.**

This, advantageously, makes it easier for the user to clean and finish the object, as well as to separate the latter from the plate.

Preferably, said flattened cross section has two rectilinear portions opposing each other with respect to the screw **22** and corresponding to two respective plane and parallel surfaces of the spherical body **8.**

It is also evident that, in variant embodiments of the invention not illustrated herein, the flattened cross section can even have just one of said rectilinear portions, or one or more portions in a shape different from the circular shape.

As regards the through opening **28** of the spherical body **8** which houses the screw **22** described above, it preferably extends according to a reference direction that is orthogonal to the screw **22** until reaching the surface of the spherical body **8,** in such a way as to have an open side.

In particular, the reference direction coincides with the direction of extraction of the spherical body **8** from the housing 7 when the modelling plate **3** is arranged in the second angular position.

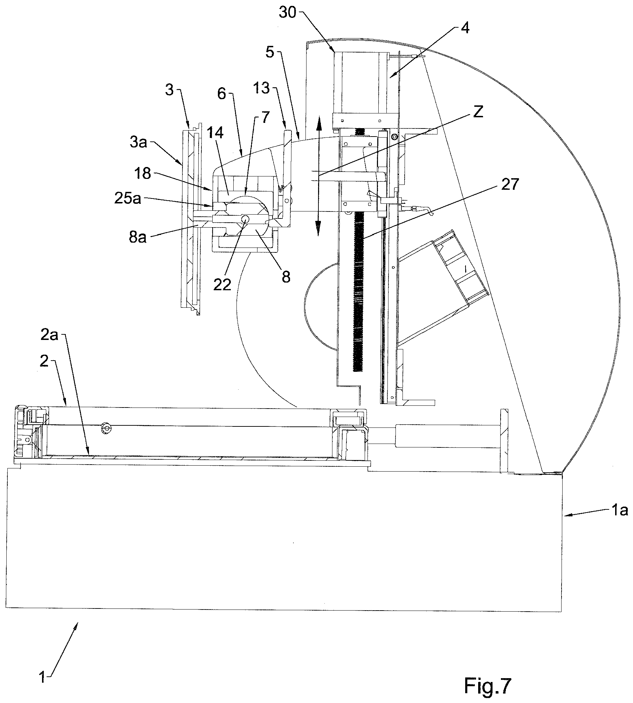

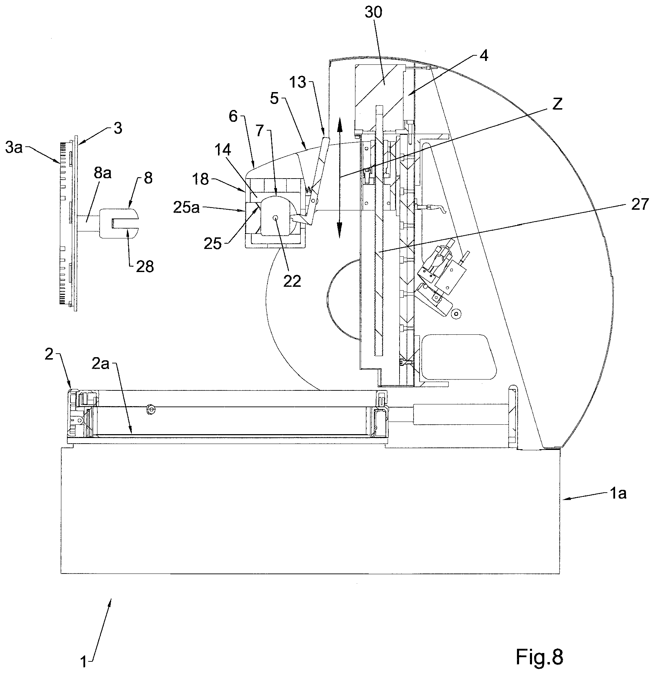

The through opening **28** with the configuration just described above makes it possible to extract the spherical body **8** from the housing **7** and to introduce it in the latter with no need to remove the screw **22,** in the manner illustrated by the succession of Figures 7 and 8.

As a result of the above, the screw **22** is arranged so that it is parallel to the rotation axis **X**, in such a way as to hinder neither the rotation of the spherical body **8**, nor its extraction from the housing **7.**

Operatively, the initialization procedure of the stereolithography machine **1** described above is carried out by arranging the modelling plate **3** as shown in Figure 8 and introducing the spherical body **8** in the housing **7** as shown in Figure 7.

Successively, the modelling plate **3** can be rotated until it reaches the first angular position shown in Figure 2.

In the configuration just described above, the clamping means **9** are maintained in the released position.

Successively, the operator activates the supporting unit **5** in such a way as to place the modelling plate **3** in contact with the bottom **2a** of the tank **2**, as can be seen in Figure 3.

The mobility of the spherical body **8** with respect to the housing **7** allows the modelling plate **3** to adapt its orientation to that of the bottom **2a.**

Preferably, in order to ensure full contact of the plate **3** with the bottom **2a**, the supporting unit **5** is lowered further, causing the spherical body **8** and the screw **22** to be shifted with respect to the supporting unit **5** and, therefore, with respect to the guide body **18** and to the respective slots **23**, **24.**

Said lowering movement of the supporting unit **5** proceeds until the first end **22a** of the screw **22** is released from the first slot **23** so as to allow the activation of the screw **22** itself.

Preferably, the process described above takes place automatically, through an initialization cycle according to which the supporting unit **5** is first lifted until reaching a reference position detected by an apposite sensor and successively the supporting unit **5** is lowered by a predefined distance suited to ensure that said release takes place, taking into account the geometric tolerance of the bottom **2a** of the tank **2.**

At this point, the operator can activate the clamping means **9** in order to fix the modelling plate **3** to the supporting unit **5**, so as to complete the initialization procedure.

The position of the supporting unit **5** at the end of the initialization procedure is stored by the control system of the machine **1** as the reference position for the processing cycle, which can start immediately with no need for further adjustments by the user.

From the explanation provided above it can be understood that the stereolithography machine described above achieves all the objects of the invention.

In particular, the coupling unit and the clamping means of the machine that is the subject of the invention make it possible to fix the modelling plate to the supporting unit independently of its position and with no need to modify said position.

This eliminates the complex series of adjusting operations that need to be performed on the modelling plate for the initialization of the machines of the known type and, furthermore, allows a very precise initialization procedure to be performed, since it is not necessary to interpose any spacer between the plate and the bottom of the tank, which would cause a tolerance to be introduced with regard to the positioning of the plate itself.

## Claims

1. Stereolithography machine (1) comprising:
- a tank (2) suited to contain a light sensitive resin and provided with a bottom (2a);
- a supporting unit (5) associated with moving means (4) suited to move said supporting unit (5) according to a direction of movement (Z) which is orthogonal to said bottom (2a);
- a modelling plate (3) provided with a modelling surface (3a) which faces said bottom (2a) in order to support a three-dimensional object;
- a coupling unit (6) suited to connect said modelling plate (3) to said supporting unit (5), configured to allow said modelling plate (3) to translate with respect to said supporting unit (5), according to said direction of movement (Z), between a first linear position, in which it is further away from said supporting unit (5), and a second linear position, in which it is nearer to said supporting unit (5), and to allow said modelling plate (3) to rotate with respect to said supporting unit (5), according to at least one rotation axis (X) which is perpendicular to said direction of movement (Z), between a first angular position, in which said modelling surface (3a) is orthogonal to said direction of movement (Z), and a second angular position, in which said modelling surface (3a) is rotated with respect to said first angular position, said coupling unit (6) comprising a housing (7) and a spherical body (8) revolvingly arranged in said housing (7) so that it can rotate at least according to said rotation axis (X);
- releasable clamping means (9);
**characterized in that** said clamping means (9) comprise:
- a hollow body (14) which defines said housing (7), said hollow body (14) being deformable, so that it can be pressed around said spherical body (8);
- control means (15) suited to be operated to press said hollow body (14) around said spherical body (8) in such a way as to make said modelling plate (3) and said supporting unit (5) integral with each other in such a way as to prevent said translation and said rotation.

2. Stereolithography machine according to claim 1, **characterized in that** said coupling unit (6) comprises releasable stop means (10) suited to be operated to lock said modelling plate (3) in said second angular position.

3. Stereolithography machine according to claim 2, **characterized in that** said stop means (10) comprise a stop body (11) maintained in contact with said spherical body (8) through the action of elastic means, said spherical body (8) being provided with a recess (12) suited to house said stop body (11) which snaps into it when said modelling plate (3) is arranged in said second angular position, release means (13) being provided which are suited to be operated to release said stop body (11) from said recess (12).

4. Stereolithography machine according to any claims from 1 to 3, **characterized in that** said hollow body (14) comprises two half-bodies (16, 17) mutually facing each other and removably associated with each other, said control means (15) being suited to be operated to vary the mutual distance between said half-bodies (16, 17).

5. Stereolithography machine according to any claims from 1 to 4, **characterized in that** said hollow body (14) is slidingly associated with said supporting unit (5) according to said direction of movement (Z) through a guide body (18).

6. Machine according to claim 5, **characterized in that** it comprises forcing means suited to force said modelling plate (3) in said first linear position.

7. Machine according to claim 5 or 6, **characterized in that** said guide body (18) comprises two jaws (19, 20) between which said hollow body (14) is interposed, said control means (15) being configured so as to press said two jaws (19, 20) against said hollow body (14).

8. Machine according to claim 7, **characterized in that** said control means (15) comprise a screw (22) which connects said two jaws (19, 20) with each other in such a way that the rotation of said screw (22) in a first direction causes said jaws (19, 20) to mutually approach each other.

9. Machine according to claim 8, **characterized in that** said screw (22) is constrained to said spherical body (8) and/or to said housing (7) according to at least one sense of said direction of movement (Z), and **in that** each one of said jaws (19, 20) is provided with a corresponding through slot (23, 24) having an elongated shape that follows said direction of movement (Z) and slidingly housing a corresponding end (22a, 22b) of said screw (22) according to said direction of movement (Z), a first end (22a) of said screw (22) and the corresponding first through slot (23) being configured to prevent the rotation of said screw (22) when said first end (22a) is arranged in a first position along said first through slot (23), corresponding to the condition in which said modelling plate (3) is in said first linear position, and to allow said rotation when said first end (22a) is arranged in a second position along said first through slot (23), corresponding to the condition in which said modelling plate (3) is in said second linear position.

10. Stereolithography machine according to any of the claims from 5 to 9, **characterized in that** the cross section of said spherical body (8) according to a reference plane passing through said rotation axis (X) has a flattened shape, said hollow body (14) and/or said guide body (18) being provided with an opening (25, 25a) whose shape matches said flattened cross section, configured so as to prevent the extraction of said spherical body (8) from said hollow body (14) and/or from said guide body (18) when said modelling plate (3) is arranged in said first angular position and to allow said extraction when said modelling plate is arranged in a position different from said first angular position and preferably coinciding with said second angular position.

## Patentansprüche

1. Stereolithographiemaschine (1), Folgendes umfassend:
- einen Behälter (2), geeignet zur Aufnahme eines lichtempfindlichen Harzes und mit einem Boden (2a) versehen;
- eine mit Bewegungsmitteln (4) verbundene Halterungseinheit (5), dazu geeignet, die besagte Halterungseinheit (5) einer zu dem besagten Boden (2a) orthogonalen Bewegungsrichtung (Z) entsprechend zu bewegen;
- eine Modellierplatte (3) mit einer Modellierfläche (3a), die zu dem besagten Boden (2a) gerichtet ist, um ein dreidimensionales Objekt zu tragen;
- eine Kupplungseinheit (6), dazu geeignet, die besagte Modellierplatte (3) mit der besagten Halterungseinheit (5) zu verbinden, dazu konfiguriert, zu erlauben, dass die besagte Modellierplatte (3) bezüglich der besagten Halterungseinheit (5) der besagten Bewegungsrichtung (Z) entsprechend verfährt, zwischen einer ersten linearen Position, in der sie weiter von der besagten Halterungseinheit (5) entfernt ist, und einer zweiten linearen Position, in der sie sich näher an der besagten Halterungseinheit (5) befindet, und zu erlauben, dass sich die besagte Modellierplatte (3) bezüglich der besagten Halterungseinheit (5) wenigstens einer lotrecht zu der besagten Bewegungsrichtung (Z) stehenden Drehachse (X) entsprechend dreht, zwischen einer ersten Winkelposition, in der die besagte Modellierfläche (3a) orthogonal zu der besagten Bewegungsrichtung (Z) steht, und einer zweiten Winkelposition, in der die besagte Modellierfläche (3a) bezüglich der besagten ersten Winkelposition gedreht ist, wobei die besagte Kupplungseinheit (6) eine Aufnahme (7) und einen kugelförmigen Körper (8) umfasst, der drehend in der besagten Aufnahme (7) aufgenommen ist, so dass er wenigstens der besagten Drehachse (X) entsprechend rotieren kann;
- lösbare Klemmmittel (9);
**dadurch gekennzeichnet, dass** die besagten Klemmmittel (9) Folgendes umfassen:
- einen Hohlkörper (14), der die besagte Aufnahme (7) definiert, wobei der besagte Hohlkörper (14) verformbar ist, so dass er um den besagten kugelförmigen Körper (8) gepresst werden kann;
- Steuermittel (15), dazu geeignet, betätigt zu werden, um den besagten Hohlkörper (14) derart um den besagten kugelförmigen Körper (8) zu pressen, dass die besagte Modellierplatte (3) und die besagte Halterungseinheit (5) derart miteinander eine Einheit bilden, dass die besagte Verfahrung und die besagte Drehung verhindert werden.

2. Stereolithographiemaschine nach Patentanspruch 1, **dadurch gekennzeichnet, dass** die besagte Kupplungseinheit (6) lösbare Anschlagmittel (10) umfasst, die dazu geeignet sind, betätigt zu werden, um die besagte Modellierplatte (3) in der besagten zweiten Winkelposition zu blockieren.

3. Stereolithographiemaschine nach Patentanspruch 2, **dadurch gekennzeichnet, dass** die besagten Anschlagmittel (10) einen Anschlagkörper (11) umfassen, der durch die Wirkung elastischer Mittel mit dem besagten kugelförmigen Körper (8) in Kontakt gehalten wird, wobei der besagte kugelförmige Körper (8) mit einer Vertiefung (12) versehen ist, die dazu geeignet ist, den besagten Anschlagkörper (11) aufzunehmen, welcher darin einschnappt, wenn die besagte Modellierplatte (3) in der besagten zweiten Winkelposition angeordnet ist, und wobei Freigabemittel (13) vorhanden sind, die dazu geeignet sind, betätigt zu werden, um den besagten Anschlagkörper (11) aus der besagten Vertiefung (12) zu lösen.

4. Stereolithographiemaschine nach einem jeden der Patentansprüche von 1 bis 3, **dadurch gekennzeichnet, dass** der besagte Hohlkörper (14) zwei Halbkörper (16, 17) umfasst, die wechselseitig zueinander gerichtet und abnehmbar miteinander verbunden sind, wobei die besagten Steuermittel (15) dazu geeignet sind, betätigt zu werden, um den wechselseitigen Abstand zwischen den besagten Halbkörpern (16, 17) zu verändern.

5. Stereolithographiemaschine nach einem jeden der Patentansprüche von 1 bis 4, **dadurch gekennzeichnet, dass** der besagte Hohlkörper (14) durch einen Führungskörper (18) der besagten Bewegungsrichtung (Z) entsprechend gleitend mit der besagten Halterungseinheit (5) verbunden ist.

6. Maschine nach Patentanspruch 5, **dadurch gekennzeichnet, dass** sie Zwangsmittel umfasst, die dazu geeignet sind, die besagte Modellierplatte (3) in die besagte erste lineare Position zu forcieren.

7. Maschine nach Patentanspruch 5 oder 6, **dadurch gekennzeichnet, dass** der besagte Führungskörper (18) zwei Spannbacken (19, 20) umfasst, zwischen denen der besagte Hohlkörper (14) eingefügt ist, wobei die besagten Steuermittel (15) so konfiguriert sind, dass sie die besagten zwei Spannbacken (19, 20) gegen den besagten Hohlkörper (14) drücken.

8. Maschine nach Patentanspruch 7, **dadurch gekennzeichnet, dass** die besagten Steuermittel (15) eine Schraube (22) umfassen, welche die besagten zwei Spannbacken (19, 20) derart miteinander verbindet, dass die Drehung der besagten Schraube (22) in einer ersten Richtung dazu führt, dass die besagten Spannbacken (19, 20) sich wechselseitig aneinander annähern.

9. Maschine nach Patentanspruch 8, **dadurch gekennzeichnet, dass** die besagte Schraube (22) wenigstens einer Richtung der besagten Bewegungsrichtung (Z) entsprechend an dem besagten kugelförmigen Körper (8) und/oder an der besagten Aufnahme (7) befestigt ist, und dadurch, dass jede der besagten Spannbacken (19, 20) mit einem entsprechenden durchgehenden Schlitz (23, 24) von länglicher Form versehen ist, welcher der besagten Bewegungsrichtung (Z) folgt und ein entsprechendes Ende (22a, 22b) der besagten Schraube (22) der besagten Bewegungsrichtung (Z) entsprechend gleitend aufnimmt, wobei ein erstes Ende (22a) der besagten Schraube (22) und der entsprechende erste durchgehende Schlitz (23) so konfiguriert sind, dass die Drehung der besagten Schraube (22) verhindert wird, wenn das besagte erste Ende (22a) in einer ersten Position entlang des besagten ersten durchgehenden Schlitzes (23) angeordnet ist, entsprechend der Bedingung, in der sich die besagte Modellierplatte (3) in der besagten ersten linearen Position befindet, und die besagte Drehung erlaubt wird, wenn das besagte erste Ende (22a) in einer zweiten Position entlang des besagten ersten durchgehenden Schlitzes (23) angeordnet ist, entsprechend der Bedingung, in der sich die besagte Modellierplatte (3) in der besagten zweiten linearen Position befindet.

10. Stereolithographiemaschine nach einem jeglichen der Patentansprüche von 5 bis 9, **dadurch gekennzeichnet, dass** der Querschnitt des besagten kugelförmigen Körpers (8) einer durch die besagte Drehachse (X) verlaufenden Bezugsebene entsprechend eine abgeflachte Form hat, wobei der besagte Hohlkörper (14) und/oder der besagte Führungskörper (18) mit einer Öffnung (25, 25a) versehen ist/sind, deren Form mit dem besagten abgeflachten Querschnitt zusammenpasst, dazu konfiguriert, den Auszug des besagten kugelförmigen Körpers (8) aus dem besagten Hohlkörper (14) und/oder aus dem besagten Führungskörper (18) zu verhindern, wenn die besagte Modellierplatte (3) in der besagten ersten Winkelposition angeordnet ist, und den besagten Auszug zu erlauben, wenn die besagte Modellierplatte in einer anderen Position als der besagten ersten Winkelposition und vorzugsweise in einer mit der besagten zweiten Winkelposition zusammenfallenden Position angeordnet ist.

## Revendications

1. Machine de stéréolithographie (1) comprenant:
- une cuve (2) indiquée pour contenir une résine photosensible et dotée d'un fond (2a);
- un groupe de support (5) associé à des moyens de mouvement (4) indiqués pour déplacer ledit groupe de support (5) selon une direction de mouvement (Z) qui est orthogonale audit fond (2a);
- une plaque de modélisation (3) dotée d'une surface de modélisation (3a) qui se trouve en face dudit fond (2a) de manière à supporter un objet tridimensionnel;
- un groupe d'accouplement (6) indiqué pour relier ladite plaque de modélisation (3) audit groupe de support (5), configuré pour consentir la translation de ladite plaque de modélisation (3) par rapport audit groupe de support (5), selon ladite direction de mouvement (Z), entre une première position linéaire dans laquelle elle est plus éloignée dudit groupe de support (5) et une deuxième position linéaire dans laquelle elle est plus proche dudit groupe de support (5), et pour consentir la rotation de ladite plaque de modélisation (3) par rapport audit groupe de support (5), selon au moins un axe de rotation (X) qui est perpendiculaire à ladite direction de mouvement (Z), entre une première position angulaire dans laquelle ladite surface de modélisation (3a) est orthogonale à ladite direction de mouvement (Z) et une deuxième position angulaire dans laquelle laite surface de modélisation (3a) est tournée par rapport à ladite première position angulaire, ledit groupe d'accouplement (6) comprenant un logement (7) et un corps sphérique (8) disposé de manière tournante dans ledit logement (7) de manière à ce qu'il peut tourner au moins selon ledit axe de rotation (X);
- des moyens de serrage (9) qui peuvent être relâchés;
**caractérisée en ce que** lesdits moyens de serrage (9) comprennent:
- un corps creux (14) qui définit ledit logement (7), ledit corps creux (14) étant déformable de manière à ce qu'il peut être pressé autour dudit corps sphérique (8);
- des moyens de contrôle (15) indiqués pour être actionnés pour presser ledit corps creux (14) autour dudit corps sphérique (8) de manière à rendre ladite plaque de modélisation (3) et ledit groupe de support (5) solidaires entre eux de manière à empêcher ladite translation et ladite rotation.

2. Machine de stéréolithographie selon la revendication 1, **caractérisée en ce que** ledit groupe d'accouplement (6) comprend des moyens d'arrêt (10) qui peuvent être relâchés, indiqués pour être actionnés afin de bloquer ladite plaque de modélisation (3) dans ladite deuxième position angulaire.

3. Machine de stéréolithographie selon la revendication 2, **caractérisée en ce que** lesdits moyens d'arrêt (10) comprennent un corps d'arrêt (11) maintenu en contact avec ledit corps sphérique (8) par l'action de moyens élastiques, ledit corps sphérique (8) étant pourvu d'une cavité (12) apte à loger par déclic ledit corps d'arrêt (11) quand ladite plaque de modélisation (3) est disposée dans ladite deuxième position angulaire, étant présents des moyens de déblocage (13) qui peuvent être actionnés pour relâcher ledit corps d'arrêt (11) de ladite cavité (12).

4. Machine de stéréolithographie selon l'une quelconque des revendications de 1 à 3, **caractérisée en ce que** ledit corps creux (14) comprend deux demi-corps (16, 17) réciproquement tournés l'un vers l'autre et associés entre eux de manière amovible, lesdits moyens de contrôle (15) étant indiqués pour être actionnés afin de varier la distance réciproque entre lesdits demi-corps (16, 17).

5. Machine de stéréolithographie selon l'une quelconque des revendications de 1 à 4, **caractérisée en ce que** ledit corps creux (14) est associé de manière coulissante audit groupe de support (5) selon ladite direction de mouvement (Z) au moyen d'un corps de guidage (18).

6. Machine selon la revendication 5, **caractérisée en ce qu'**elle comprend des moyens forçage aptes à forcer ladite plaque de modélisation (3) dans ladite première position linéaire.

7. Machine selon la revendication 5 ou 6, **caractérisée en ce que** ledit corps de guidage (18) comprend deux mâchoires (19, 20) entre lesquelles ledit corps creux (14) est interposé, lesdites moyens de contrôle (15) étant configurés de manière à presser lesdites deux mâchoires (19, 20) contre ledit corps creux (14).

8. Machine selon la revendication 7, **caractérisée en ce que** lesdits moyens de contrôle (15) comprennent une vis (22) qui relie lesdites deux mâchoires (19, 20) entre elles de manière à ce que la rotation de ladite vis (22) dans une première direction provoque le rapprochement réciproque entre lesdites mâchoires (19, 20).

9. Machine selon la revendication 8, **caractérisée en ce que** ladite vis (22) est bloquée sur ledit corps sphérique (8) et/ou sur ledit logement (7) selon au moins un sens de ladite direction de mouvement (Z), et **en ce que** chacune desdites mâchoires (19, 20) est dotée d'une fente passante correspondante (23, 24) ayant une forme allongée suivant ladite direction de mouvement (Z) et logeant de manière coulissante une extrémité correspondante (22a, 22b) de ladite vis (22) selon ladite direction de mouvement (Z), une première extrémité (22a) de ladite vis (22) et la première fente passante correspondante (23) étant configurées pour empêcher la rotation de ladite vis (22) quand ladite première extrémité (22a) est disposée dans une première position le long de ladite première fente passante (23), correspondant à la condition dans laquelle ladite plaque de modélisation (3) se trouve dans ladite première position linéaire, et pour consentir ladite rotation quand ladite première extrémité (22a) est disposée dans une deuxième position le long de ladite première fente passante (23), correspondant à la condition dans laquelle ladite plaque de modélisation (3) se trouve dans ladite deuxième position linéaire.

10. Machine de stéréolithographie selon l'une quelconque des revendications de 5 à 9, **caractérisée en ce que** la section transversale dudit corps sphérique (8) selon un plan de référence passant par ledit axe de rotation (X) présente un profil aplati, ledit corps creux (14) et/ou ledit corps de guidage (18) présentant une ouverture (25, 25a) ayant une forme correspondant à ladite section transversale aplatie, configurée de manière à empêcher l'extraction dudit corps sphérique (8) dudit corps creux (14) et/ou dudit corps de guidage (18) quand ladite plaque de modélisation (3) est disposée dans ladite première position angulaire et à consentir ladite extraction quand ladite plaque de modélisation est disposée dans une position différente de ladite première position angulaire et préférablement coïncidant avec ladite deuxième position angulaire.
